# NEW EUROPEAN PATENT SPECIFICATION

(11) **EP 0 343 185 B2**
(45) Date of publication and mention of the opposition decision: **13.01.1999**
(45) Mention of the grant of the patent: 02.09.1992
(21) Application number: 88901681.2
(22) Date of filing: 19.01.1988
(51) Int. Cl.: G03G 15/00, G03G 15/01

(54) **ELECTROSTATOGRAPHIC METHOD AND APPARATUS FOR PRODUCING MULTICOLOR DUPLEX REPRODUCTIONS**
ELEKTROSTATOGRAPHISCHES VERFAHREN UND GERÄT ZUR HERSTELLUNG VON MEHRFARBIGEN ZWEISEITIGEN KOPIEN
PROCEDE ET APPAREIL ELECTROSTATOGRAPHIQUES SERVANT A PRODUIRE DES REPRODUCTIONS DUPLEX MULTICOLORES

(30) Priority: 10.11.1987 US 119370
(43) Date of publication of application: 29.11.1989
(73) Proprietor: EASTMAN KODAK COMPANY (a New Jersey corporation), Rochester, New York 14650 (US)
(72) Inventor: MAHONEY, Gregory, Peter, Rochester, New York 14650 (US); BENWOOD, Bruce, Robert, Rochester, New York 14650 (US)
(74) Representative: Blickle, K. Werner, Dipl.-Ing.
(86) International application number: US8800107
(87) International publication number: WO8904510

(56) References cited:
- WO-A-87/02792
- US-A- 3 506 347
- US-A- 4 194 829
- US-A- 4 477 176
- US-A- 4 515 460
- Xerox Disclosure Journal, vol. 9, no. 1, January/February 1984, (Stamford, Conn. US) R.A. Andrews: "Single pass duplex in electronic systems", pages 47, 48

## Description

### Technical Field

This invention relates to electrostatography and, more specifically, to a method and apparatus for producing multicolor toner images and for transferring them to opposite sides of the same copy sheet.

### Background Art

Present commercial copiers and printers which create duplex output generally fall into one of two categories. In a double pass system, images are transferred to one side of a series of copy sheets, those images are fused and the copy sheets are placed in a duplex tray. From the duplex tray they are refed to the transfer station to receive images for the other side of the copy sheet, these images also are fused and sent to an output hopper. See, for example, U.S. Patents 3,630,607 and 4,099,150.

In a single pass system, the copy sheet is fed to a transfer station to receive an image on one side and then is turned over and fed back to either the same transfer station or a second transfer station to receive an image on the other side. U. S. 3,672,765 shows an early example of this approach in which two transfer stations and two fusers are used, the first image being fused before the copy sheet is turned over for feeding to the second transfer station. The second fuser is used to fuse the second image before the copy sheet goes to the output hopper.

US-A-3,506,347 discloses a method and an apparatus for forming xerographic reproductions on both sides of a copy sheet. A first tackifiable xerographic powder image is formed on a support, the powder image on the support is subjected to solvent vapors rendering the powder image tackified. This tackified image is transferred to the first side of a copy sheet. The same process as mentioned above is carried out for a second powder image. As this method or apparatus processes tackified images there is no need for handling and inverting unfused powder images.

An apparatus for producing duplex copies is disclosed in US-A-4,194,829. The apparatus includes an image transfer member and a copy sheet turnover member. Black and white powder images are transferred to the first and the second side of a copy sheet. The unfused powder images are fixed in a single fuser station. As mentioned above, with this apparatus only black and white reproductions are possible.

The Kodak Ektaprint 250 copier introduced in 1982 provided a substantial advance in the single pass form of duplexing. In that copier a turnaround mechanism is positioned between the first and second transfer stations and a copy sheet transport mechanism is positioned after the second transfer station, neither of which disturbs either of the powder images, permitting fusing of both images simultaneously after the second transfer. This system has a number of advantages over the two-pass system. The paper path is considerably shorter, paper jam clearance is easier, access time to the first sheet is greatly reduced, and the order of imaging in automatic collation systems is more straight forward. This latter advantage is especially useful when the system is used as part of a non-impact printer because data fed to a printer is generally in page sequential order, an order which printers using a duplex tray cannot conveniently use. This system also eliminates significant disadvantages of systems in which the images are separately fused. That is, the two images in such latter system get different amounts of fusing and the second transfer system must operate with a warmed copy sheet which may result in image voids from wrinkles and the like. It also saves the expense of an additional fuser often used in such systems.

Present electrostatographic color systems create separate toner images of different color and transfer them in registry to a single copy sheet. The separate toner images can be created on the same or different electrophotosensitive members.

An electrographic apparatus, of the single-pass type, capable of producing simplex or duplex copies on a receiver sheet travelling in a continuous direction along a path is shown in WO 87/02792. The apparatus includes a first and a second member, and an electrostatic field is used to transfer the unfused toner image from the first to the second member. From the second member the image is transferred to a receiving member. For producing a duplex copy, a second image is transferred form the first member to the opposite side of the receiving member. This apparatus does not provide the possibility to do duplex multicolor reproductions.

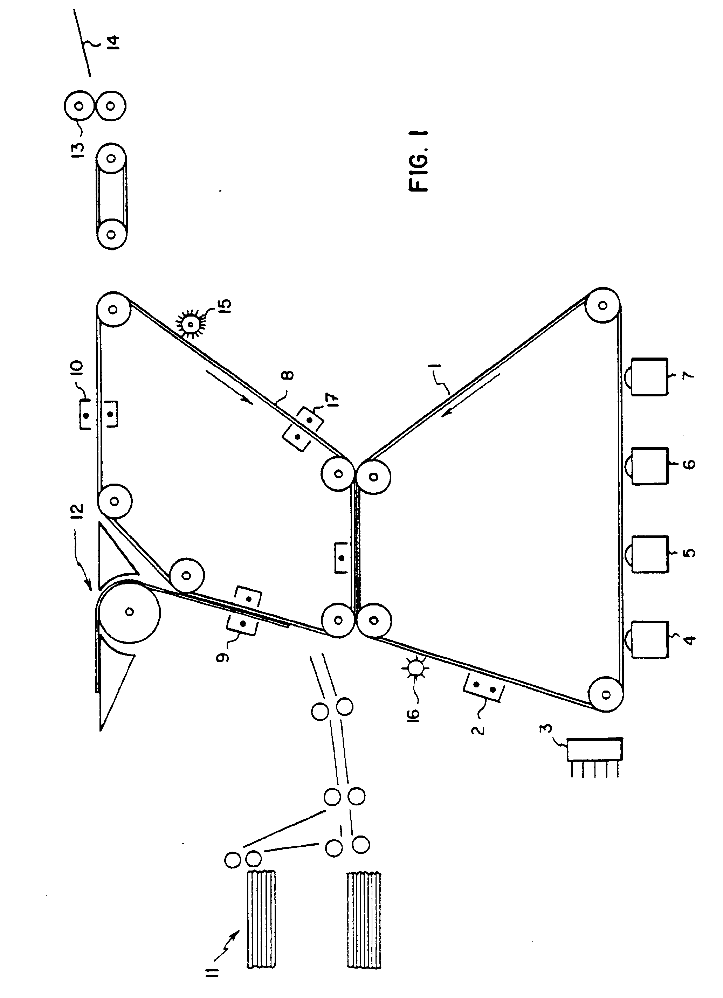

U.S. Patent 4,477,176 shows an adaptation of the single-pass duplexing structure to multicolor duplex reproduction. According to Fig. 3 of that patent, color separation images for two multicolor images are formed in order on an electrophotosensitive web. A copy sheet is fed to first and second transfer rollers, each of which have means for holding the copy sheet through at least two revolutions bringing it into contact with consecutive images to receive them in registration. The first transfer drum is reversible for inverting the copy sheet after it has received two or more images in registry on one side. The copy sheet is then fed through a fuser, is tacked to the second transfer drum, receives images in registry on the other side, is fed then to a second fuser and ultimately to an output hopper.

U.S. Patents 3,838,919; 4,515,460 and 4,652, 115 are examples of the use of intermediate drums or webs to receive a plurality of toner images in registration from which webs or drums the registered toner images are transferred in one step to a receiving sheeL These devices have the advantage of more precise registration than devices in which a copy sheet must be held securely as it is circulated through transfer relation with the images.

### Disclosure of the Invention

It is the object of the invention to provide a method and apparatus for producing multicolor duplex reproductions in which the copy sheet is moved through a relatively short paper path and in which registration of the components of the multicolor images is easily achieved.

These and other objects are accomplished by a method according to claim 1 and an apparatus according to claim 3. Both multicolor images can be formed on the intermediate member before transferring either image, or the first multicolor image can be transferred before the second is formed on the intermediate member.

With this method the advantages of a short, uncomplicated paper path gained by use of a single pass duplexing mechanism can be combined with the advantages of precise registration readily obtained using an intermediate transfer member.

It is an additional advantage of the invention to do single pass duplex color at high productivity without the need for a big buffer.

According to a preferred embodiment, the above-mentioned advantages of the Kodak Ektaprint 250 copier can be obtained by inverting the copy sheet carrying an unfused multicolor image between transfers; receiving the second multicolor image and transporting the copy sheet to the fuser for simultaneous fusing of both images.

### Brief Description of the Drawing

The figure is a schematic drawing of apparatus constructed according to the invention.

### Best Mode of Carrying Out the Invention

According to the figure, an insulating member, for example, electrophotosensitive belt 1 which may be of a typical electrophotographic type is used to create toner images of different color by procedures well known in the art. As shown, the belt 1 is uniformly charged at a charging station 2 and exposed at an exposing station 3 providing a series of electrostatic images. The electrostatic images are each toned by one offour toning stations 4, 5, 6 and 7, each of which contains toner of a desired color. These images make up the color component of two multicolor images to be produced. The electrophotosensitive belt then passes into transfer relation with an intermediate member 8 which is moving at the same speed as the electrophotosensitive belt 1 at the point or points of contact of the two members.

The images formed on the electrophotosensitive belt 1 are transferred in registration to the intermediate member creating first and second multicolor images.

Intermediate member 8 is also an endless belt mounted on a series of rollers and driven through a path bringing it into operative relationship with a first transfer station 9 and a second transfer station 10. Copy sheets stored in a copy sheet supply 11 are fed in a known manner to first transfer station 9 for receipt of a first multicolor image on a first side thereof. Copy sheets are fed from first transfer station 9 to a turnaround drum 12 which inverts the copy sheets without touching the, as yet unfused, multicolor toner image on the first side and feeds the copy sheet into transfer relation with the intermediate member 8 at the second transfer station 10. A second multicolor toner image is transferred to the second side of the copy sheet at the second transfer station 10. The copy sheet is then fed to a duplex fuser 13 and then into an output hopper 14.

Control and feeding of the copy sheet from the first transfer station 9 through the fuser 13 must be done with care not to disturb unfused toner images. Such apparatus is shown and described more completely in U.S. Patent No. 4,095,979, issued June 20, 1978 to DiFrancesco et al.

The electrophotosensitive belt is cleaned at cleaning station 16 between images. The intermediate member 8 may also be cleaned by appropriate means 15. The transfer stations 9 and 10 include corona chargers of opposite polarity in opposite sides of member 8, urging the toner from the intermediate member 8 to the copy sheet. An initialization station 17 includes opposing AC chargers for eliminating charge on the intermediate member 8 before repeating the process.

The exposure station 3 is shown as an electronic print head. It, of course, may be an ordinary optical exposing station. However, single-pass duplexing is particularly useful with electronic origin images because the order of images received in a printer fits the order of images handled by the transfer apparatus in that system.

The electrostatic images need not be created electrophotographically. For example, they may be formed electrographically by an ion projection mechanism on an ordinary, not photosensitive, insulating surface.

Intermediate member 8 can be equal in length to the length of a single image frame, or multiples thereof. For example, it can be equal in length to 17 inches plus an interframe to enable the apparatus to produce 11 X 17 images (1 inch = 25.4 mm). If a belt accommodating this size is used and images having a width equal to 8-1/2 inches are formed in some applications, then there is room on the intermediate member to receive two 8-1/2 inch wide images placed with the 8-1/2 inch dimension running longitudinally of the two webs. With this arrangement, two multicolor images would be carried on intermediate web 8 at one time. Thus, in a four color system, using 8 1/2 inch wide copy sheets the order of images on the electrophotosensitive member 1 can be Cyan No. 1, Cyan No. 2, Magenta No. 1, Magenta No. 2, Yellow No. 1, Yellow No. 2, Black No. 1 and Black No. 2. Two-multicolor images would then appear on consecutive half portions of the intermediate member as it reaches the first and second transfer stations 9 and 10, respectively. In the 11 X 17 mode, only one multicolor image is formed at a time on the web 8. The first multicolor image is transferred to the copy sheet, and the copy sheet waits at turnaround drum 12 while the intermediate web makes four revolutions to form the second multicolor image. At that time, the transfer sheet is fed to the second transfer station to receive it.

Thus, the intermediate member 8 can be one frame in size, in which case the copy sheet is delayed at turnaround drum 12; the intermediate member can be two or more images in length, in which case the copy sheet is returned immediately to transfer station 10 from the turnaround drum; or, it can operate sometimes in one mode and sometimes in the other, as described above.

Either or both of the webs 1 and 8 can be drums, although copy sheet separation is easier to accomplish without disturbing unfused images if at least the intermediate member is a belt.

If simplex copies are to be made with this apparatus, the copy sheets can be fed directly to the second transfer station 10 by means not shown.

The invention has been described in detail with particular reference to a preferred embodiment thereof, but it will be understood that variations and modifications can be effected within the scope of the invention as described hereinabove and as defined in the appended claims.

## Claims

1. A method of producing single pass multicolor duplex reproductions comprising:
forming a plurality of electrostatic images on an insulating member;
toning said images with toners of different colors;
transferring, in registration, said toner images to an intermediate member to form a first multicolor toner image;
transferring said first multicolor toner image to the first side of a copy sheet;
repeating the first three steps to form a second multicolor toner image on said intermediate member;
transferring said second multicolor toner image to the second side of said copy sheet and
simultaneously fixing said first and second toner images to the copy sheet.

2. A method according to claim 1, wherein said steps of forming electrostatic images include alternately forming images intended for the first and the second multicolor toner images on the insulating member and the steps of forming the multicolor images include transferring the resulting toner images alternately to two different portions of the intermediate member.

3. Apparatus for performing the metnod of claim 1 comprising:
means (2,3) for forming a plurality of electrostatic images on an insulating member (1);
means (4,5,6,7) for toning said images with toners of different colors, respectively; an intermediate member(8);
means for transferring. in registration, a first set of toner images to said intermediate member to form a first multicolor toner image and for transferring, in registration, a second set of toner images also having different colors to said intermediate member to form a second multicolor image;
a first transfer station(9) for transferring said first multicolor toner image to the first side of a copy sheet;
a second transfer station(10) for transferring said second multicolor toner image to the second side of a copy sheet;
means for feeding said copy sheet to said first transfer station(9), for inverting said copy sheet without disturbing said first toner image after said copy sheet has received said first toner image, and for feeding said copy sheet to the second transfer station (10), means (13) for simultaneously fixing said first and second toner images to said copy sheet; and
means for feeding said copy sheet to the fixing means without disturbing the toner images.

4. Apparatus according to claim 3, wherein said intermediate member(8) is an endless belt of a length sufficient to accommodate simultaneously two multicolor images.

5. Apparatus according to claim 3, wherein said intermediate member(8) is an endless belt of a length sufficient to accommodate simultaneously only one multicolor image.

6. Apparatus according to claim 5 wherein said means (12) for inverting the copy sheet includes means for delaying the copy sheet until the second multicolor image is approaching the second transfer station.

## Patentansprüche

1. Verfahren zur Herstellung mehrfarbiger doppelseitiger Reproduktionen in einem Arbeitsgang, **dadurch gekennzeichnet**, daß
- eine Mehrzahl von elektrostatischen Bildern auf einem isolierenden Element erzeugt wird,
- Toner unterschiedlicher Farbe auf diese Bilder aufgebracht wird,
- die Tonerbilder passergenau auf einen Zwischenbildträger übertragen werden, um ein erstes mehrfarbiges Tonerbild zu erzeugen,
- das erste mehrfarbige Tonerbild auf die erste Seite eines Kopieblatts übertragen wird,
- die ersten drei Arbeitsschritte wiederholt werden, um auf dem Zwischenbildträger ein zweites mehrfarbiges Tonerbild zu erzeugen,
- das zweite mehrfarbige Tonerbild auf die zweite Seite des Kopieblatts übertragen wird, und
- das erste und zweite Tonerbild gleichzeitig auf dem Kopieblatt fixiert werden.

2. Verfahren nach Anspruch 1, dadurch gekennzeichnet, daß beim Erzeugen elektrostatischer Bilder abwechselnd Bilder für das erste und das zweite mehrfarbige Tonerbild auf dem isolierenden Elmenet erzeugt werden und beim Herstellen der mehrfarbigen Bilder die erhaltenen Tonerbilder abwechselnd auf zwei verschiedene Abschnitte des Zwischenbildträgers übertragen werden.

3. Vorrichtung zum Durchführen des Verfahrens nach Anspruch 1, **gekennzeichnet durch**
- Mittel (2, 3) zum Erzeugen einer Mehrzahl elektrostatischer Bilder auf einem isolierenden Element,
- Mittel (4, 5, 6, 7) zum Aufbringen von Toner unterschiedlicher Farbe auf die verschiedenen Bilder,
- einen Zwischenbildträger (8),
- Mittel zum passergenauen Übertragen eines ersten Satzes von Tonerbildern auf den Zwischenbildträger, um ein erstes mehrfarbiges Tonerbild zu erzeugen, und zum passergenauen Übertragen eines zweiten Satzes von Tonerbildern mit ebenfalls unterschiedlichen Farben auf den Zwischenbildträger, um ein zweites mehrfarbiges Bild zu erzeugen,
- eine erste Bildübertragungsstation (9) zum Übertragen des ersten mehrfarbigen Tonerbildes auf die erste Seite eines Kopieblatts,
- eine zweite Bildübertragungsstation (10) zum Übertragen des zweiten mehrfarbigen Tonerbildes auf die zweite Seite eines Kopieblatts,
- Mittel zum Zuführen des Kopieblatts zur ersten Bildübertragungsstation (9), zum Umdrehen des Kopieblatts nach dem Aufbringen des ersten Tonerbildes ohne Beeinträchtigung dieses Tonerbildes und zum Zuführen des Kopienblatts zur zweiten Bildübertragungstation (10), ein Mittel (13) zum gleichzeitigen Fixieren des ersten und zweiten Tonerbildes auf dem Kopieblatt, und
- Mittel zum Zuführen des Kopieblatts ohne Beeinträchtigung der Tonerbilder zum Fixiermittel.

4. Vorrichtung nach Anspruch 3, dadurch gekennzeichnet, daß der Zwischenbildträger (8) ein Endlosband ist, dessen Länge so bemessen ist, daß es gleichzeitig zwei mehrfarbige Bilder aufnehmen kann.

5. Vorrichtung nach Anspruch 3, dadurch gekennzeichnet, daß der Zwischenbildträger (8) ein Endlosband ist, dessen Länge so bemessen ist, daß es gleichzeitig nur ein mehrfarbiges Bild aufnehmen kann.

6. Vorrichtung nach Anspruch 5, dadurch gekennzeichnet, daß das Mittel (12) zum Umdrehen des Kopieblatts (12) eine Einrichtung umfaßt, die das Kopieblatt solange zurückhält, bis sich das zweite mehrfarbige Bild der zweiten Bildübertragungsstation nähert.

## Revendications

1. Procédé pour fournir en un seul passage des copies recto-verso à plusieurs couleurs comprenant :
la formation de plusieurs images électrostatiques sur un organe isolant ;
le développement desdites images avec des développateurs de couleur différentes ;
le transfert, en repérage, desdites images de développateur sur un organe intermédiaire pour former une première image de développateur à plusieurs couleurs ;
le transfert de ladite première image de développateur à plusieurs couleurs sur la première face de la feuille de copie ;
la reprise des trois premières étapes pour former une seconde image de développateur à plusieurs couleurs sur ledit organe intermédiaire ;
le transfert de ladite seconde image de développateur à plusieurs couleurs sur la deuxième face de ladite feuille de copie ; et
le fixage simultané desdites première et seconde images de développateur sur ladite feuille de copie.

2. Procédé selon la revendication 1, dans lequel les étapes pour former les images électrostatiques comprennent alternativement la formation des images destinées à la première et à la seconde image de développateur à plusieurs couleurs sur l'organe intermédiaire et les étapes de formation des images à plusieurs couleurs comprennent le transfert des images de développateur résultantes sur deux parties différentes de l'organe intermédiaire.

3. Appareil pour la mise en oeuvre du procédé selon la revendication 1 comprenant :
des moyens (2,3) pour former plusieurs images électrostatiques sur un organe isolant (1) ;
des moyens (4, 5, 6, 7) pour développer lesdites images avec des développateurs de couleurs différentes, respectivement ;
un organe intermédiaire (8) ;
des moyens pour transférer, en repérage, un premier jeu d'images de développateur sur ledit organe intermédiaire pour former une première image de développateur à plusieurs couleurs et pour transférer, en repérage, un second jeu d'images de développateur présentant elles aussi des couleurs différentes sur l'organe intermédiaire afin de former une seconde image à plusieurs couleurs,
un premier poste de transfert (9) pour transférer ladite première image de développateur à plusieurs couleurs sur la première face d'une feuille de copie ;
un second poste de transfert (10) pour transférer ladite seconde image de développateur à plusieurs couleurs sur la seconde face de la feuille de copie ;
des moyens pour alimenter la feuille de copie audit premier poste de transfert (9), des moyens (12) pour retourner cette feuille sans perturber ladite première image de développateur après que la feuille de copie ait reçue ladite première image de développateur et pour alimenter ladite feuille de copie au second poste de transfert (10 ),
des moyens (13) pour fixer simultanément ladite première image de développateur et ladite seconde image de développateur sur la feuille de copie ; et
des moyens pour alimenter la feuille de copie aux moyens pour fixer sans perturber les images de développateur.

4. Appareil selon la revendications 3, dans lequel ledit organe intermédiaire (8) est une bande sans fin de longueur suffisante pour recevoir simultanément deux images à plusieurs couleurs.

5. Appareil selon la revendication 3, dans lequel ledit organe intermédiaire (8) est une bande sans fin de longueur telle qu'elle ne peut recevoir simultanément qu'une seule image à plusieurs couleur.

6. Appareil selon la revendication 5, dans lequel lesdits moyens (12) pour retourner la feuille de copie comprennent des moyens de temporisation pour ne délivrer la feuille de copie qu'une fois que la seconde image de développateur à plusieurs couleurs arrive au second poste de transfert.
